# FASCICULE DE BREVET EUROPEEN

(11) **EP 3 300 951 B1**
(45) Date de publication et mention de la délivrance du brevet: **20.11.2019**
(21) Numéro de dépôt: 17184923.5
(22) Date de dépôt: 04.08.2017
(51) Int. Cl.: B60Q 1/068

(54) **DISPOSITIF D'ÉCLAIRAGE ET/OU DE SIGNALISATION POUR VÉHICULE AUTOMOBILE ET ENSEMBLE COMPORTANT PLUSIEURS DISPOSITIFS**
BELEUCHTUNGS- UND/ODER SIGNALISIERUNGSVORRICHTUNG FÜR KRAFTFAHRZEUG, UND EINHEIT, DIE MEHRERE SOLCHE VORRICHTUNGEN UMFASST
LIGHTING AND/OR SIGNALLING DEVICE FOR A MOTOR VEHICLE AND ASSEMBLY COMPRISING A PLURALITY OF DEVICES

(30) Priorité: 26.09.2016 FR 1659052
(43) Date de publication de la demande: 04.04.2018
(73) Titulaire: Valeo Vision, 93012 Bobigny Cedex (FR)
(72) Inventeur: DUBUC, Cyril, 93012 BOBIGNY Cedex (FR); GARIN, Pascal, 93012 BOBIGNY Cedex (FR)

(56) Documents cités:
- EP-A1- 3 115 621
- FR-A- 1 525 325
- FR-A1- 2 819 041
- FR-A1- 3 010 690
- FR-A5- 2 188 527
- US-A- 5 003 436
- US-A- 5 908 239
- US-A1- 2016 201 869

## Description

### DOMAINE TECHNIQUE DE L'INVENTION

L'invention concerne un dispositif d'éclairage et/ou de signalisation, notamment pour véhicule automobile.

Un tel dispositif peut se présenter notamment sous la forme d'un projecteur lumineux de véhicule automobile, par exemple pour produire un faisceau lumineux d'éclairage ou un faisceau code. La demande de brevet FR-A1-2819041 montre un phare de véhicule comprenant un réflecteur dont l'orientation est réglable grâce à un mécanisme de visée comportant deux vis et deux écrous.

### ARRIERE PLAN TECHNIQUE DE L'INVENTION

L'invention concerne plus particulièrement un dispositif d'éclairage et/ou de signalisation qui comporte un module optique d'émission vers l'avant d'un faisceau lumineux selon un axe horizontal d'émission qui est monté sur un support des différents composants du module optique.

Le support de chaque module optique est agencé sur un élément structurel du dispositif d'éclairage qui est un élément d'armature sur lequel chaque support est monté de manière réglable par l'intermédiaire d'un mécanisme de visée permettant le réglage de l'axe d'émission du module optique, et notamment d'au moins une inclinaison de l'axe d'émission du module optique, par exemple dans un plan horizontal et/ou dans un plan vertical.

L'invention vise notamment à proposer une conception d'un mécanisme de visée qui permet notamment de réaliser un réglage précis et fiable dans le temps de l'orientation de l'axe d'émission par rapport à l'armature.

L'invention vise aussi à proposer un ensemble comportant plusieurs dispositifs d'éclairage selon l'invention dont les mécanismes de visée associés permettent un réglage précis et fiable dans le temps des orientations relatives des différents axes d'émission.

### BREF RESUME DE L'INVENTION

L'invention propose un dispositif d'éclairage et/ou de signalisation, notamment de véhicule automobile, comprenant au moins un module optique d'émission vers l'avant d'un faisceau lumineux selon un axe horizontal d'émission, qui est monté sur un support agencé sur une armature qui s'étend dans un plan transversal globalement orthogonal à l'axe d'émission, le support étant monté de manière réglable sur l'armature par l'intermédiaire d'un mécanisme de visée pour permettre le réglage de l'axe d'émission du module optique,
le mécanisme de visée comportant au moins deux tiges filetées parallèles portées par le support dont chacune s'étend longitudinalement vers l'arrière à travers un trou associé de l'armature et porte un écrou sphérique comportant une face active de serrage à profil en tronc de sphère qui coopère avec une surface d'appui complémentaire formée en vis-à-vis dans la face arrière de l'armature,
les au moins deux tiges filetées comportant :
- une tige filetée de référence qui porte un écrou sphérique de référence dont la face active coopère avec une surface d'appui complémentaire sphérique de référence à profil en tronc de sphère ;
   caractérisé en ce que lesdites au moins deux tiges filetées comportent au moins une tige filetée de réglage qui porte un écrou sphérique de réglage dont la face active coopère avec une surface d'appui complémentaire cylindrique de réglage à profil en tronc de cylindre.

Selon d'autres caractéristiques de l'invention :
- le mécanisme de visée comporte une troisième tige filetée de pivotement parallèle aux tiges filetées de référence et de réglage qui est portée par le support associé, qui s'étend longitudinalement vers l'arrière à travers un trou associé de l'armature et qui porte un écrou sphérique de pivotement comportant une face active à profil en tronc de sphère qui coopère avec une surface d'appui complémentaire de profil linéaire de pivotement formée en vis-à-vis dans la face arrière de l'armature, pour constituer avec la tige filetée de référence des moyens de guidage en pivotement, du support par rapport à l'armature autour d'un axe de pivotement passant par les centres des surfaces actives de l'écrou sphérique de référence et de l'écrou sphérique de pivotement ;
- la surface d'appui complémentaire de profil linéaire comporte deux nervures rectilignes d'appui situées de part et d'autre de l'écrou sphérique de pivotement ;
- la ligne passant par les centres des surfaces actives de l'écrou sphérique de référence et de l'écrou sphérique de réglage s'étend dans un plan horizontal de réglage de l'inclinaison de l'axe d'émission du module optique ;
- la ligne passant par les centres des surfaces actives de l'écrou sphérique de référence et de l'écrou sphérique de réglage s'étend dans un plan vertical de réglage de l'inclinaison de l'axe d'émission du module optique ;
- l'axe de pivotement est orthogonal à la ligne passant par les centres des surfaces actives de l'écrou sphérique de référence et de l'écrou sphérique de réglage ;
- le tronçon de chaque tige filetée qui s'étend longitudinalement à travers le trou associé de l'armature est reçu avec un jeu radial dans le dit trou associé ;
- le support comporte une aile plane de fixation qui s'étend dans un plan globalement orthogonal à l'axe d'émission et qui porte lesdites tiges filetées qui s'étendent longitudinalement vers l'arrière depuis une face arrière de cette aile de fixation ;
- l'aile de fixation comporte une face avant qui porte au moins un composant du module optique ;
- le support comporte une platine qui s'étend vers l'avant à partir de l'aile de fixation et qui porte au moins un composant du module optique ;
- le support est réalisé en une seule pièce par moulage ;
- l'armature est une plaque dans laquelle sont formés lesdits trous et qui est délimitée par ladite face arrière et par une face avant ;
- la plaque s'étend dans un plan globalement parallèle à l'aile de fixation ;
- l'armature est réalisée en une seule pièce par moulage ;
- le module optique comprend :
   * soit l'assemblage d'un collecteur agencé pour collecter la lumière issue d'une source lumineuse, d'une plieuse présentant un bord de coupure en vue de laisser passer seulement une partie du faisceau provenant du collecteur et de produire ainsi un faisceau lumineux correspondant et sa coupure, et d'un réflecteur agencé pour émettre vers l'avant ledit faisceau lumineux correspondant ;
   * soit l'assemblage d'un collecteur agencé pour collecter la lumière issue d'une source lumineuse, d'une plieuse présentant au moins un bord de coupure en vue d'autoriser le passage de seulement une partie du faisceau provenant du collecteur et d'émettre le faisceau lumineux correspondant et sa coupure, et une lentille agencée pour focaliser le faisceau lumineux provenant du collecteur ;
   * soit un réflecteur présentant une surface complexe configurée pour collecter la lumière issue d'une source lumineuse et émettre vers l'avant le faisceau lumineux correspondant présentant une coupure ;
- le module optique comporte un dispositif de refroidissement qui, directement ou indirectement, est en contact avec le support ;
- le module optique comporte au moins une source lumineuse sous forme d'au moins une diode électroluminescente.

L'invention propose aussi un ensemble d'éclairage et/ou de signalisation, notamment de véhicule automobile, comportant au moins :
- un premier dispositif selon l'invention d'émission vers l'avant d'un premier faisceau lumineux selon un axe horizontal d'émission ;
- et un deuxième dispositif selon l'invention d'émission vers l'avant d'un deuxième faisceau lumineux selon un axe horizontal d'émission,
le premier support du premier dispositif et le deuxième support du deuxième dispositif étant agencés l'un par rapport à l'autre sur une armature commune qui s'étend dans un plan transversal globalement orthogonal aux axes d'émission,
le premier support et le deuxième support étant montés de manière réglable sur l'armature commune par l'intermédiaire d'un premier mécanisme de visée et d'un deuxième mécanisme de visée respectivement.

Selon d'autres caractéristiques de l'ensemble :
- le premier mécanisme de visée comporte des moyens de blocage en position du premier support, par rapport à l'armature commune ;
- chaque tige filetée du premier mécanisme de visée comporte un épaulement qui est en appui longitudinal contre une portion en vis-à-vis d'une face avant de l'armature commune ;
- le deuxième mécanisme de visée comporte des moyens de réglage de la position longitudinale du deuxième support, par rapport à l'armature commune, selon une direction parallèle au deuxième axe d'émission ;

- chaque tige filetée du deuxième mécanisme de visée s'étend à travers un ressort qui est monté comprimé longitudinalement entre le deuxième support et l'armature commune ;
- l'ensemble comporte un troisième dispositif selon l'invention d'émission vers l'avant d'un troisième faisceau lumineux selon un axe horizontal d'émission,
   le troisième support du troisième dispositif étant agencé sur l'armature commune, et étant monté de manière réglable sur l'armature commune par l'intermédiaire d'un troisième mécanisme de visée dont la conception est identique à celle du deuxième mécanisme de visée ;
- le premier dispositif est agencé transversalement entre les deuxième et troisième dispositifs.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'un exemple de réalisation d'un ensemble d'éclairage selon l'invention comportant trois dispositifs d'éclairage selon l'invention dont chacun comporte un support individuel associé agencé sur une armature commune ;

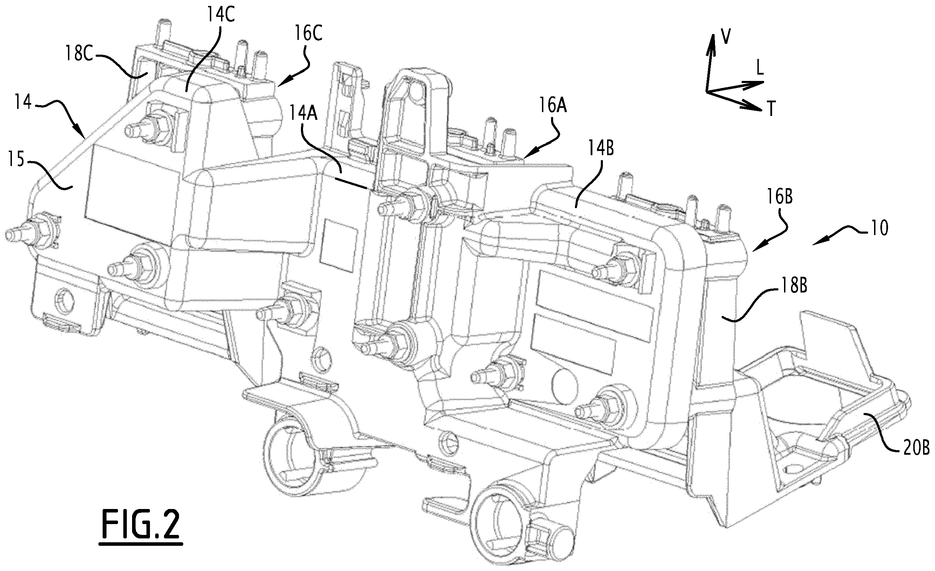

- la figure 2 est une vue en perspective selon un autre angle de représentation que celui de la figure 1 qui, pour le même ensemble, illustre uniquement l'armature commune, les trois supports individuels et les trois mécanismes de visée ;

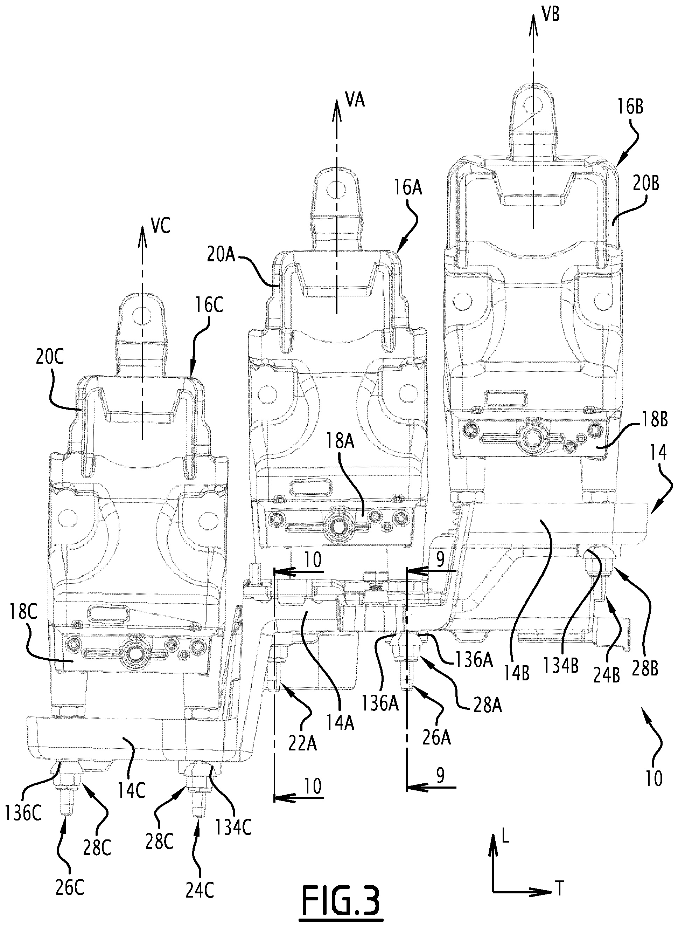

- la figure 3 est une vue de dessus des éléments illustrés à la figure 2 ;

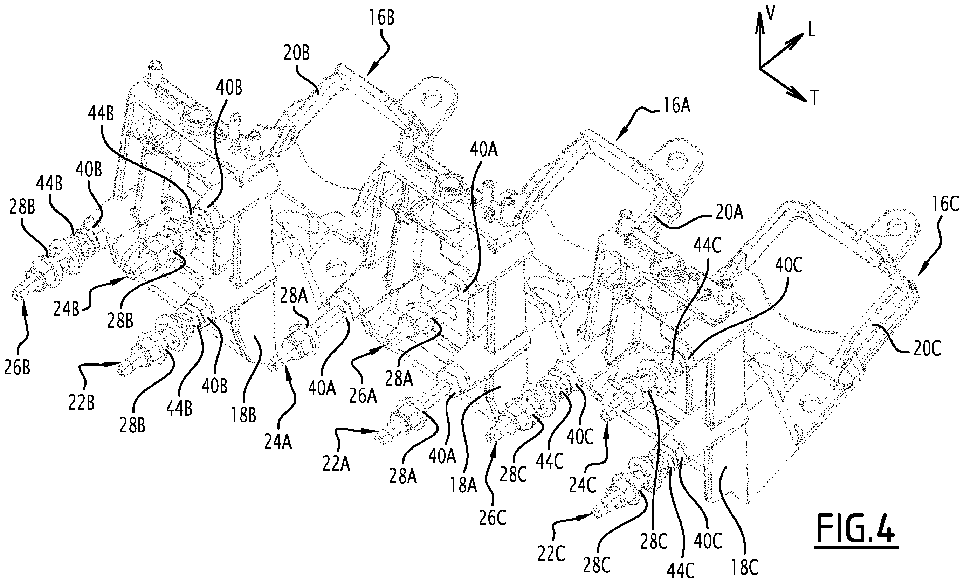

- la figure 4 est une vue analogue à celle de la figure 2 sans l'armature commune,

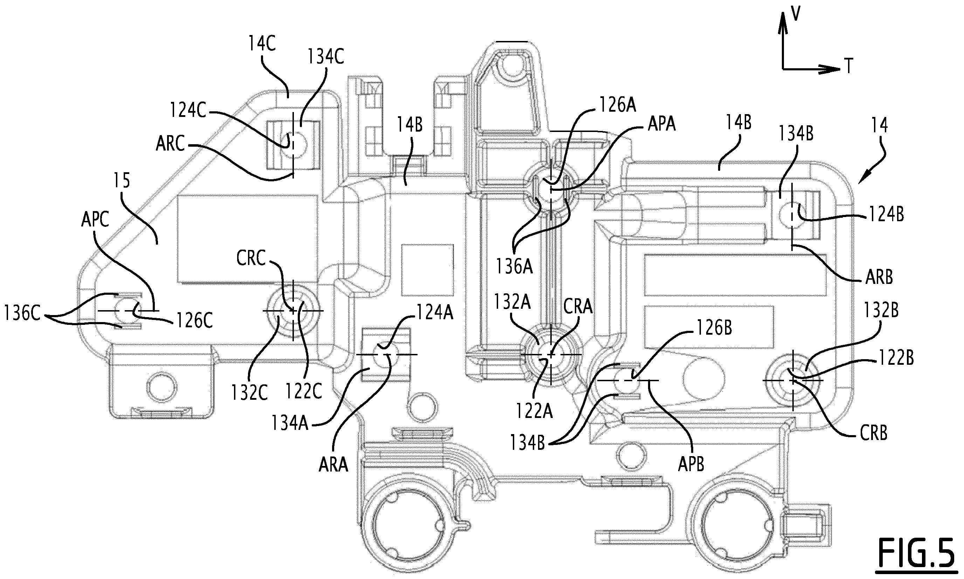

- la figure 5 est une vue arrière en élévation de l'armature commune ;
- la figure 6 est une vue avant en perspective de l'armature commune ;
- la figure 7 est une vue en perspective illustrant un écrou sphérique appartenant à un mécanisme de visée ;
- la figure 8 est une vue de détail à grande échelle de la partie centrale de l'armature commune illustrée à la figure 5 ;
- la figure 9 est une vue en section selon un plan vertical passant par la ligne 9-9 de la figure 3 ;
- la figure 10 est une vue en section par un plan vertical selon la ligne 10-10 de la figure 3 ;
- la figure 11 est une vue en perspective illustrant un des trois modules optiques appartenant à l'ensemble illustré à la figure 1 avec ses principaux composants ; et
- la figure 12 est une vue en perspective selon le même angle que celui de la figure 1 qui illustre la plieuse commune aux trois dispositifs en association avec les trois supports et trois réflecteurs.

### DESCRIPTION DETAILLEE DES FIGURES

Dans la description qui va suivre, des composants identiques, analogues, ou similaires seront désignés par les mêmes références.

A titre non limitatif et sans référence à la gravité terrestre, on utilisera les termes vertical, horizontal, transversal, longitudinal en référence au trièdre L, V, T représenté sur les figures.

Il sera fait référence à l'orientation avant-arrière selon la direction de l'axe longitudinal L des trièdres représentés sur les figures.

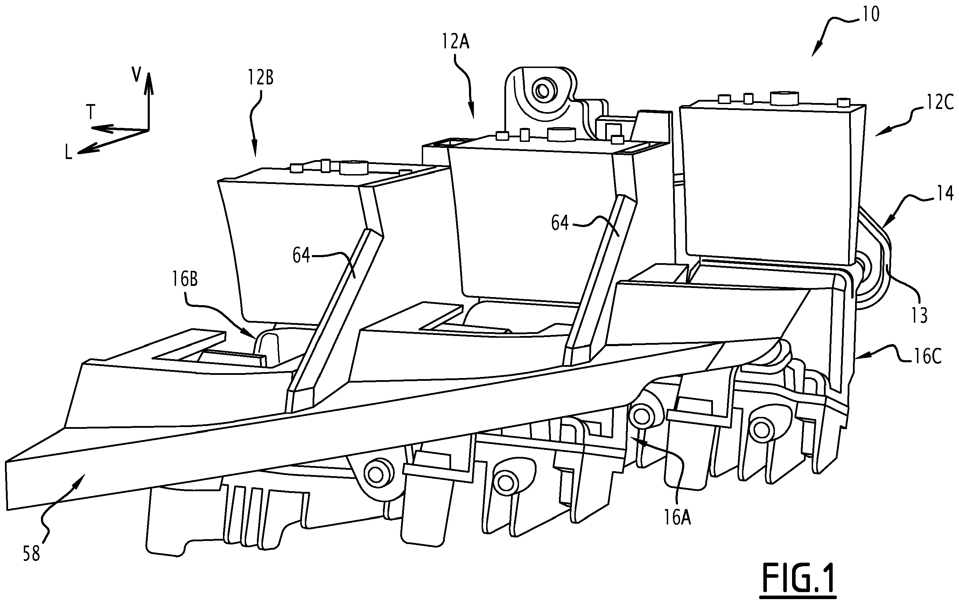

On a représenté à la figure 1 un ensemble d'éclairage 10 comportant trois modules optiques adjacents 12A, 12B et 12C qui sont sensiblement alignés transversalement avec un léger décalage vertical des uns par rapport aux autres et avec un léger décalage longitudinal des uns par rapport aux autres.

Chaque module optique d'émission 12A, 12B et 12C est de conception générale identique, conception qui sera décrite en détail par la suite.

Chaque module optique d'émission 12A, 12B, et 12C permet l'émission d'un faisceau lumineux vers l'avant, selon un axe d'émission globalement horizontal, les trois axes horizontaux d'émission VA, VB, VC étant globalement parallèles, aux écarts angulaires près permis par les mécanismes de visée qui seront décrits par la suite. Au nominal, les trois axes ne sont pas parallèles.

L'ensemble 10 comporte une armature commune 14 sur laquelle sont montés les trois modules optiques 12A, 12B, et 12C.

L'armature commune 14 est une pièce réalisée par moulage qui s'étend globalement dans un plan vertical et transversal et qui comporte trois parties consécutives adjacentes 14B, 14A, 14C décalées longitudinalement l'une par rapport à l'autre et sur chacune desquelles sont montés les trois supports individuels 16B, 16A, et 16C respectivement.

Chaque support individuel 16A, 16B, 16C est une pièce réalisée par moulage qui est constituée pour l'essentiel par une aile de fixation 18A, 18B, et 18C en forme de plaque qui s'étend globalement dans une plan vertical et transversal, c'est-à-dire sensiblement parallèle à la partie correspondante en vis-à-vis 14A, 14B, 14C de l'armature commune 14.

Chaque support individuel 16A, 16B, et 16C comporte aussi une platine porte-composants 20A, 20B, et 20C qui s'étend globalement vers l'avant à partir de la portion inférieure de l'aile verticale de fixation correspondante 16A, 16B, et 16C.

Pour permettre son montage sur l'armature commune 14 et son réglage, notamment angulaire par rapport à l'armature commune 14, chaque support individuel 16A, 16B, et 16C est associé à un mécanisme dit de visée (ou de réglage) dont chacun est ici constitué globalement d'un groupe de trois tiges filetées et de trois écrous sphériques.

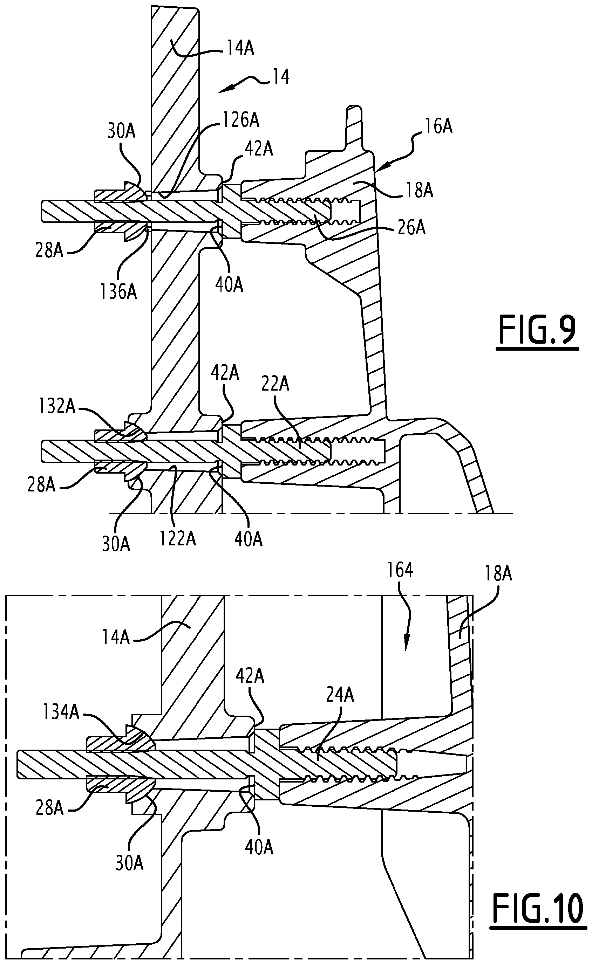

Ainsi, chaque mécanisme de visée comporte trois tiges filetées parallèles dont chacune est ici portée par l'aile de fixation 18A, 18B, et 18C du support individuel 16A, 16B, et 16C associé auquel elles sont par exemple fixées par vissage de leurs tronçons avant (voir figures 9 et 10), ou en variante par surmoulage.

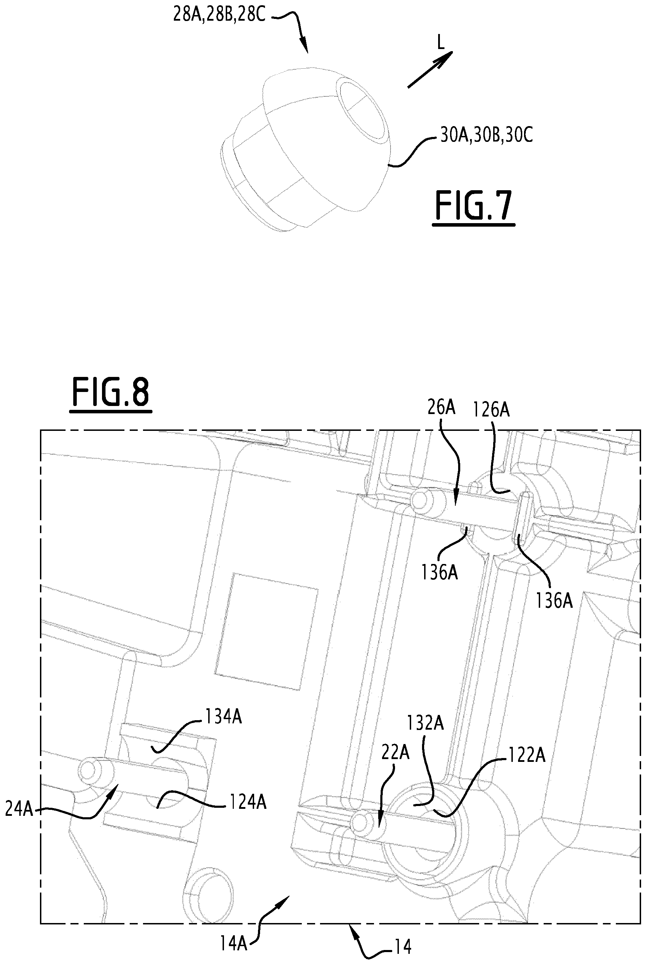

Les trois tiges filetées s'étendent longitudinalement vers l'arrière et chacune porte un écrou de serrage dit sphérique 28A, 28B, et 28C respectivement qui, comme on peut le voir à la figure 7, comporte une face active de serrage à profil en tronc de sphère 30A, 30B et 30C qui est ici de profil convexe.

A titre d'exemple non limitatif, toutes les tiges filetées et tous les écrous sphériques sont ici de conception identique.

Chaque mécanisme de visée comporte une première tige filetée 22A, 22B, et 22C dite tige filetée de référence qui porte un écrou sphérique de référence associé, une deuxième tige filetée dite de réglage 24A, 24B, et 24C qui porte un écrou sphérique de réglage associé, et une troisième tige filetée dite de pivotement 26A, 26B, et 26C qui porte un écrou sphérique de pivotement associé.

La notion de tige filetée de référence, de réglage ou de pivotement se définit par rapport au type ou mode de coopération de l'écrou sphérique associé avec une partie correspondante de l'armature commune 14.

Chaque partie 14A, 14B, et 14C de l'armature commune 14 comporte un groupe de trois trous qui sont ici agencés en constituant les sommets d'un triangle rectangle isocèle.

Chaque trou est traversé, avec jeu radial, par un tronçon intermédiaire d'une tige filetée associée.

Chaque tige filetée de référence 22A, 22B, et 22C s'étend longitudinalement vers l'arrière à travers un trou 122A, 122B, et 122C ; chaque tige de réglage 24A, 24B, et 24C s'étend longitudinalement vers l'arrière à travers un trou 124A, 124B, 124C ; et chaque tige filetée de pivotement s'étend longitudinalement vers l'arrière à travers un trou associé 126A, 126B et 126C de l'armature commune 14.

Dans la face arrière 13 de l'armature commune 14, chaque trou est délimité par une portion de surface plane d'appui 42A, 42B, 42C qui s'étend dans un plan transversal et vertical, les trois portions de surface plane - d'un même groupe de trois trous s'étendant à travers une partie 14A, 14B, et 14C respectivement - étant situées dans un même plan transversal et vertical.

Dans la face avant 15 de l'armature 14, chaque trou débouche dans une surface associée d'appui dont le profil est fonctionnel et distinct en fonction de la tige filetée de référence, de réglage, ou de pivotement qui le traverse.

On distingue les trous 122A, 122B, et 122C associés aux tiges filetées de référence 22A, 22B et 22C dont chacun débouche dans une surface d'appui complémentaire sphérique de référence 132A, 132B, et 132C à profil en tronc de sphère concave dont chacun est complémentaire du profil de la face active de serrage 30A, 30B, et 30C d'un écrou sphérique associé 28A, 28B, et 28C.

Chaque tige filetée de référence 22A, 22B, et 22C est ainsi montée à rotation par rapport à l'armature commune 14 autour d'un centre de rotation CRA, CRB, CRC qui correspond au centre de la surface d'appui sphérique de référence.

Chaque trou 124A, 124B, 124C traversé par une tige filetée de réglage 22A, 24B, et 24C débouche dans une surface d'appui complémentaire cylindrique 134A, 134B, et 134C dont chacune est à profil en tronc de cylindre concave, l'axe ARA, ARB, ARC de chaque surface d'appui cylindrique 134A, 134B, et 134C passant par le centre associé CRA, CRB, CRC.

L'axe ARA du mécanisme de réglage central s'étend ici selon la direction horizontale transversale, tandis que les axes ARB et ARC des mécanismes de visée latéraux s'étendent chacun selon une direction verticale.

Chaque tige filetée de pivotement 26A, 26B, et 26C s'étend à travers un trou associé 126A, 126B, et 126C de l'armature commune 14 qui, dans la face arrière 15, est entouré d'une surface d'appui complémentaire de profil linéaire dont chacune est ici constituée de deux nervures rectilignes d'appui parallèles entre elles 136A, 136B, et 136C.

Les deux nervures de chaque paire sont situées de part et d'autre du trou associé 126A, 126B, et 126C et elles sont formées en relief de manière à constituer deux arrêtes d'appui parallèles.

Les deux nervures 136A, 136B, 136C de chaque paire de nervures sont parallèles à un axe médian de pivotement APA, APB, APC qui passe par le centre de rotation associé CRA, CRB, CRC.

L'axe de pivotement APA de mécanisme central de visée s'étend ici selon la direction verticale et est orthogonal à l'axe ARA.

Chacun des axes de pivotement APB et APC des mécanismes de visée latéraux est ici horizontal et orthogonal à l'axe ARB, ARC associé.

La coopération de la surface active 30 de chaque écrou 28 avec une surface d'appui complémentaire sphérique 132A, 132B, 132C constitue un contact sphérique de chaque écrou sur l'armature commune 14.

L'appui de la face active d'un écrou sphérique 28 avec une surface d'appui cylindrique associée 134A, 134B, 134C constitue un contact linéaire de chaque écrou sphérique sur l'armature commune 14.

La coopération de la face active 30 de chaque écrou avec la paire de nervures rectilignes 136a, 136B, 136C détermine un appui longitudinal quasi ponctuel de l'écrou contre l'armature commune 14.

Outre son tronçon fileté qui s'étend à travers un trou associé de l'armature commune 14 et permet le vissage d'un écrou sphérique associé, chaque tige filetée, comporte un épaulement qui délimite une face annulaire arrière d'appui longitudinal 40A, 40B, et 40C respectivement.

Les trois faces annulaires 40A, 40B, et 40C des tiges filetées de chaque mécanisme de visée s'étendent sensiblement dans un même plan vertical et transversal.

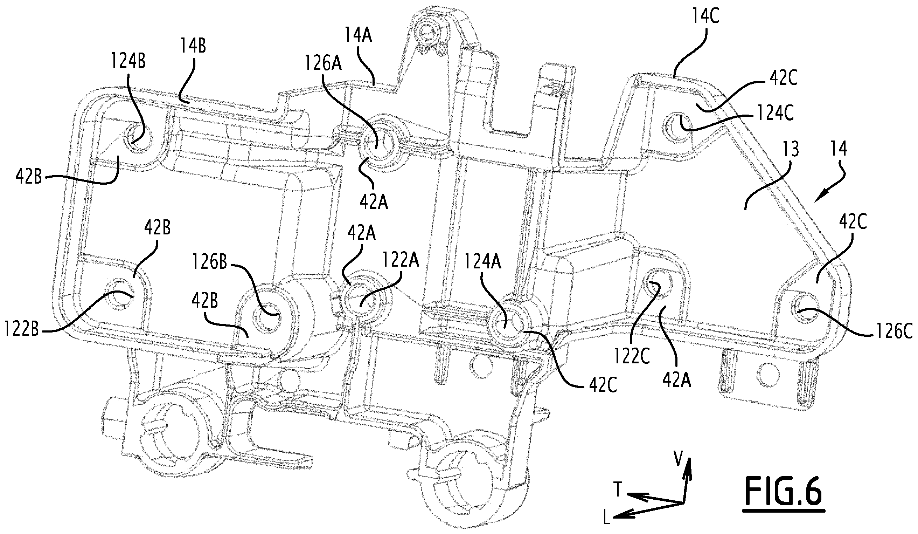

Comme on peut le voir à la figure 6, chacun des trous 122A, 124A, et 126A formés dans la partie centrale 14A de l'armature commune 14 est entouré d'une face annulaire plane d'appui 42A orientée vers l'avant.

Les surfaces annulaires d'appui 42A s'étendent toutes les trois sensiblement dans un même plan vertical et transversal.

S'agissant des parties latérales 14B et 14C, chaque trou est entouré d'une surface annulaire d'appui plane orientée longitudinalement vers l'avant 42B, 42C respectivement.

Les trois surfaces d'appui 42B, 42C associées à un même mécanisme de visée sont situées sensiblement dans le même plan vertical et transversal.

Pour le montage et le réglage des modules latéraux 12B et 12C, chaque tige filetée du mécanisme de visée associé, est équipée d'un ressort de compression à boudin 44B, 44C qui est traversé par le tronçon fileté et qui est monté comprimé longitudinalement entre la plaque de fixation 18B, 18C et la partie associée 14B, 14C de l'armature commune 14.

Comme on peut le voir aux figures 9 et 10, s'agissant du module optique central 12A, les tiges filetées du mécanisme de visée ne sont pas équipées d'un ressort de compression et en position montée et fixée, chaque épaulement annulaire d'appui 40A est en appui longitudinal contre la surface d'appui annulaire associée en vis-à-vis 42A.

Ainsi, le module central constitue un module "fixe" dont la position longitudinale et l'orientation de son axe d'émission VA est fixée en premier pour constituer une référence, par rapport à l'armature commune 14, pour le réglage des autres axes d'émission VB et/ou VC.

Seule l'interposition éventuelle de rondelles ou de cales entre les surfaces en appui 40A et 42A pourrait en variante permettre de régler la position longitudinale, selon un axe globalement parallèle à l'axe d'émission VA, du support 16A par rapport à l'armature 14-14A

Chacun des modules latéraux, ici au nombre de deux, est un module dont le réglage de la "visée" est effectué ensuite par rapport à l'armature commune 14 pour régler indirectement la position longitudinale et l'orientation ou l'inclinaison de son axe d'émission VB, VC par rapport à l'axe d'émission VA du module central 12A.

La conception faisant appel à des écrous sphériques et la conception des surfaces complémentaires d'appui associées permet, de par la nature des "contacts" correspondants (sphériques 22, linéaires 24 et ponctuels 26) de permettre et/ou de bloquer les mouvements de translation et/ou de rotation autour des différents axes L, V, T.

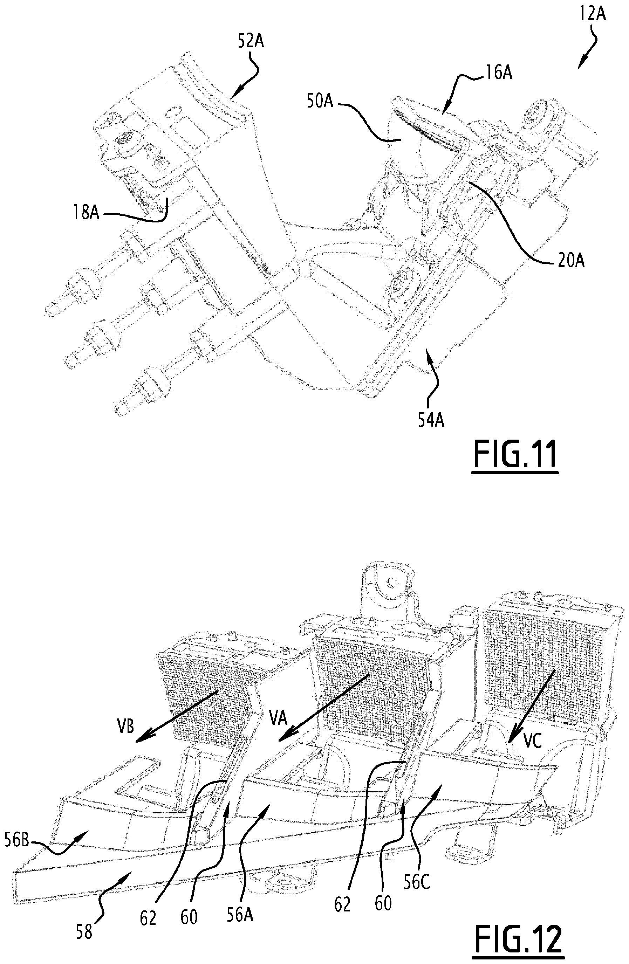

A titre non limitatif, et comme on peut le voir notamment à la figure 11, ici en référence au module optique central 12A, un module optique comporte par exemple une source lumineuse (non visible) portée par la platine 20A et recouverte d'un collecteur ou lentille 50A et d'un réflecteur 52A.

Le réflecteur 52A est fixé sur l'aile de fixation 18A du support 16A.

Le module optique 12A comporte encore un dispositif de refroidissement 54A qui est ici agencé sous la face inférieure de la platine 20A. Le dispositif de refroidissement 54A est ici indirectement en contact avec le support avec interposition d'une carte à circuits imprimés.

L'ensemble 10 comporte une pièce unique 58 qui est fixée sur le support 16A du module optique central 12A (voir figures 1 et 12). La pièce 58 est un masque pour améliorer l'esthétique de l'ensemble 10 et il comporte trois parties principales 56A, 56B, 56C dont chacune est associée à un module optique.

Le masque 58 comporte deux cloisons intermédiaires 60 d'orientation verticale et longitudinale dont chacune s'étend entre deux modules adjacents et constitue un cache qui évite que des rayons lumineux émis par un module atteignent des composants du module optique adjacent.

Dans son bord libre supérieur incliné, chaque cloison 60 comporte une fente 62 pour le montage d'un élément d'habillage décoratif 64 (Voir figure 1).

L'invention n'est pas limitée à l'exemple de réalisation qui vient d'être décrit.

La conception "sphérique" des écrous constitue un mode de réalisation préféré mais, sans sortir du cadre de l'invention, il est possible de faire appel à toute conception équivalente de la face active de serrage, par exemple tronconique ou annulaire permettant d'obtenir, en coopération avec les surfaces d'appui complémentaires, les mêmes principes de contacts sphérique, linéaire et ponctuel.

L'invention telle que revendiquée inclut les variantes (non représentées) faisant appel à des inversions mécaniques telles par exemple l'inversion des parties convexes et concaves complémentaires, ou l'inversion de l'agencement des tiges filetées sur l'armature commune et coopérant avec des trous formés dans les supports.

De même, s'agissant de ses composants, la conception générale d'un module optique n'a été donnée qu'à titre d'exemple, celle-ci pouvant varier de manière importante tel que cela est par exemple illustré dans les documents FR-A-2.979.971 ou FR-A-2.964.724.

A titre d'exemple non limitatif, l'invention a été décrite en référence à une orientation globalement « horizontale » des axes des modules, cette orientation générale pouvant être différente dans l'espace.

## Revendications

1. Dispositif d'éclairage et/ou de signalisation, notamment de véhicule automobile, comprenant au moins un module optique (12A, 12B, 12C) d'émission vers l'avant d'un faisceau lumineux (VA, VB, VC) selon un axe horizontal d'émission, qui est monté sur un support (16A, 16B, 16C) agencé sur une armature (14) qui s'étend dans un plan transversal globalement orthogonal à l'axe d'émission, le support (16A, 16B, 16C) étant monté de manière réglable sur l'armature (14) par l'intermédiaire d'un mécanisme de visée pour permettre le réglage de l'axe d'émission du module optique,
le mécanisme de visée comportant au moins deux tiges filetées parallèles (22A, 22B, 22C - 24A, 24B, 24C) portées par le support dont chacune s'étend longitudinalement vers l'arrière à travers un trou associé (122A, 122B, 122C - 124A, 124B, 124C) de l'armature (14) et porte un écrou sphérique (28A, 22B, 28C) comportant une face active de serrage (30A, 30B, 30C) à profil en tronc de sphère qui coopère avec une surface d'appui complémentaire formée en vis-à-vis dans la face arrière (15) de l'armature (14),
lesdites au moins deux tiges filetées comportant :
- une tige filetée de référence (22A, 22B, 22C) qui porte un écrou sphérique de référence dont la face active coopère avec une surface d'appui complémentaire sphérique de référence (132A, 132B, 132C) à profil en tronc de sphère ; **caractérisé en ce que** lesdites au moins deux tiges filetées comportent au moins une tige filetée de réglage (24A, 24B, 24C) qui porte un écrou sphérique de réglage dont la face active coopère avec une surface d'appui complémentaire cylindrique de réglage (134A, 134B, 134C) à profil en tronc de cylindre.

2. Dispositif selon la revendication 1, **caractérisé en ce que** le mécanisme de visée comporte une troisième tige filetée (26A, 26B, 26C) de pivotement parallèle aux tiges filetées de référence et de réglage qui est portée par le support associé (14), qui s'étend longitudinalement vers l'arrière à travers un trou associé (126A, 126B, 126C) de l'armature (14) et qui porte un écrou sphérique de pivotement (28A, 28B, 28C) comportant une face active (30A, 30B, 30C) à profil en tronc de sphère qui coopère avec une surface d'appui complémentaire de profil linéaire (136A, 136B, 136C) de pivotement formée en vis-à-vis dans la face arrière (15) de l'armature(14), pour constituer avec la tige filetée de référence (22A, 22B, 22C) des moyens de guidage en pivotement, du support par rapport à l'armature autour d'un axe de pivotement (APA, APB, APC) passant par les centres (CRA, CRB, CRC) des surfaces actives (132A, 132B, 132C) de l'écrou sphérique de référence et de l'écrou sphérique de pivotement.

3. Dispositif selon la revendication 2, **caractérisé en ce que** ladite surface d'appui complémentaire de profil linéaire comporte deux nervures rectilignes d'appui (136A, 136B, 136C) situées de part et d'autre de l'écrou sphérique de pivotement.

4. Dispositif selon l'une quelconque des revendications 1 à 3, **caractérisé en ce que** la ligne passant par les centres des surfaces actives de l'écrou sphérique de référence et de l'écrou sphérique de réglage s'étend dans un plan horizontal de réglage de l'inclinaison de l'axe d'émission du module optique.

5. Dispositif selon l'une quelconque des revendications 1 à 3, **caractérisé en ce que** la ligne passant par les centres des surfaces actives de l'écrou sphérique de référence et de l'écrou sphérique de réglage s'étend dans un plan vertical de réglage de l'inclinaison de l'axe d'émission du module optique.

6. Dispositif selon la revendication 3, **caractérisé en ce que** l'axe de pivotement (APA, APB, APC) est orthogonal à la ligne passant par les centres des surfaces actives de l'écrou sphérique de référence et de l'écrou sphérique de réglage.

7. Dispositif selon l'une quelconque des revendications précédentes, **caractérisé en ce que** le tronçon de chaque tige filetée (22A, 24A, 26A, 22B, 24B, 26B, 22C, 24C, 26C) qui s'étend longitudinalement à, travers le trou associé (122A, 124A, 126A, 122B, 124B, 126B, 122C, 124C, 126C) de l'armature (14) est reçu avec un jeu radial dans le dit trou associé.

8. Dispositif selon l'une quelconque des revendications précédentes, **caractérisé en ce que** le support (16A, 16B, 16C) comporte une aile plane de fixation (18A, 18B, 18C) qui s'étend dans un plan globalement orthogonal à l'axe d'émission et qui porte lesdites tiges filetées qui s'étendent longitudinalement vers l'arrière depuis une face arrière de cette aile de fixation.

9. Dispositif selon la revendication 8, **caractérisé en ce que** l'aile de fixation (18A, 18B, 18C) comporte une face avant qui porte au moins un composant (52A, 52B, 52C) du module optique (12A, 12B, 12C).

10. Dispositif selon la revendication 8, **caractérisé en ce que** le support (16A, 16B, 16C) comporte une platine (20A, 20B, 20C) qui s'étend vers l'avant à partir de l'aile de fixation (18A, 18B, 18C) et qui porte au moins un composant (50A, 50B, 50C) du module optique.

11. Dispositif selon l'une quelconque des revendications précédentes, **caractérisé en ce que** le support (16A, 16B, 16C) est réalisé en une seule pièce par moulage.

12. Dispositif selon l'une quelconque des revendications précédentes, **caractérisé en ce que** l'armature (14) est une plaque (14A, 14B, 14C) dans laquelle sont formés lesdits trous et qui est délimitée par ladite face arrière (15) et par une face avant (13).

13. Dispositif selon la revendication 10 prise en combinaison avec l'une quelconque des revendications 8 à 10, **caractérisé en ce que** ladite plaque (14A, 14B, 14C) s'étend dans un plan globalement parallèle à ladite aile de fixation (18A, 18B, 18C).

14. Dispositif selon l'une quelconque des revendications précédentes, **caractérisé en ce que** l'armature (14) est réalisée en une seule pièce par moulage.

15. Dispositif selon l'une quelconque des revendications précédentes, **caractérisé en ce que** le module optique (12A, 12B, 12C) comprend :
* soit l'assemblage d'un collecteur (50A, 50B, 50C) agencé pour collecter la lumière issue d'une source lumineuse, d'une plieuse (56A, 56B, 50C) présentant un bord de coupure en vue de laisser passer seulement une partie du faisceau provenant du collecteur et de produire ainsi un faisceau lumineux correspondant et sa coupure, et d'un réflecteur (52A, 52B, 52C) agencé pour émettre vers l'avant ledit faisceau lumineux correspondant ;
* soit l'assemblage d'un collecteur agencé pour collecter la lumière issue d'une source lumineuse, d'une plieuse présentant au moins un bord de coupure en vue d'autoriser le passage de seulement une partie du faisceau provenant du collecteur et d'émettre le faisceau lumineux correspondant et sa coupure, et une lentille agencée pour focaliser le faisceau lumineux provenant du collecteur ;
* soit un réflecteur présentant une surface complexe configurée pour collecter la lumière issue d'une source lumineuse et émettre vers l'avant le faisceau lumineux correspondant présentant une coupure.

16. Dispositif selon l'une quelconque des revendications précédentes, **caractérisé en ce que** le module optique (12A, 12B, 12C) comporte un dispositif de refroidissement (54A, 54B, 54C) qui, directement ou indirectement, est en contact avec le support (16A, 16B, 16C).

17. Dispositif selon l'une quelconque des revendications précédentes, **caractérisé en ce que** le module optique comporte au moins une source lumineuse sous forme d'au moins une diode électroluminescente.

18. Ensemble (10) d'éclairage et/ou de signalisation, notamment de véhicule automobile, comportant au moins :
- un premier dispositif selon l'une quelconque des revendications précédentes d'émission vers l'avant d'un premier faisceau lumineux selon un axe horizontal d'émission (VA) ;
- et un deuxième dispositif selon l'une quelconque des revendications précédentes d'émission vers l'avant d'un deuxième faisceau lumineux selon un axe horizontal d'émission (VB),
le premier support (16A) du premier dispositif et le deuxième support (16B) du deuxième dispositif étant agencés l'un par rapport à l'autre sur une armature commune (14) qui s'étend dans un plan transversal globalement orthogonal aux axes d'émission, le premier support (16A) et le deuxième support (16B) étant montés de manière réglable sur l'armature commune (14) par l'intermédiaire d'un premier mécanisme de visée et d'un deuxième mécanisme de visée respectivement.

19. Ensemble selon la revendication 18, **caractérisé en ce que** le premier mécanisme de visée comporte des moyens de blocage en position du premier support (16A), par rapport à l'armature commune (14, 14A).

20. Ensemble selon la revendication 19, **caractérisé en ce que** chaque tige filetée du premier mécanisme de visée comporte un épaulement (40A) qui est en appui longitudinal contre une portion en vis-à-vis (42A) d'une face avant (13) de l'armature commune (14, 14A).

21. Ensemble selon la revendication 18, **caractérisé en ce que** le deuxième mécanisme de visée comporte des moyens (28B) de réglage de la position longitudinale du deuxième support, par rapport à l'armature commune, selon une direction parallèle au deuxième axe d'émission.

22. Ensemble selon la revendication 21, **caractérisé en ce que** chaque tige filetée du deuxième mécanisme de visée s'étend à travers un ressort (44B) qui est monté comprimé longitudinalement entre le deuxième support (16B) et l'armature commune (14).

23. Ensemble selon l'une quelconque des revendications 18 à 22, **caractérisé en ce qu'**il comporte un troisième dispositif selon l'une quelconque des revendications précédentes d'émission vers l'avant d'un troisième faisceau lumineux selon un axe horizontal d'émission (VC),
le troisième support (16C) du troisième dispositif étant agencé sur l'armature commune (14, 14A), et étant monté de manière réglable sur l'armature commune par l'intermédiaire d'un troisième mécanisme de visée dont la conception est identique à celle du deuxième mécanisme de visée.

24. Ensemble selon la revendication 23, **caractérisé en ce que** le premier dispositif est agencé transversalement entre les deuxième et troisième dispositifs.

## Patentansprüche

1. Beleuchtungs- und/oder Signalvorrichtung, insbesondere für Kraftfahrzeuge, mit mindestens einem optischen Modul (12A, 12B, 12C) zur Übertragung eines Lichtstrahls (VA, VB, VC) nach vorne entlang einer horizontalen Emissionsachse, der auf einem Träger (16A, 16B) montiert ist, 16C), die auf einem Rahmen (14) angeordnet ist, der sich in einer Querebene erstreckt, die im Allgemeinen orthogonal zur Emissionsachse verläuft, wobei der Träger (16A, 16B, 16C) über einen Visiermechanismus verstellbar am Rahmen (14) montiert ist, um die Einstellung der Emissionsachse des optischen Moduls zu ermöglichen,
wobei der Visiermechanismus mindestens zwei parallele Gewindestangen (22A, 22B, 22C - 24A, 24A, 24A, 24B, 24C) umfasst, die von dem Träger getragen werden, von denen sich jede in Längsrichtung nach hinten durch ein zugehöriges Loch (122A, 122B, 122C - 124A, 124B) erstreckt, 124C) des Ankers (14) und trägt eine Kugelmutter (28A, 22B, 28C) mit einer klemmenden aktiven Fläche (30A, 30B, 30C) mit einem verkürzten Kugelprofil, die mit einer komplementären Lagerfläche zusammenwirkt, die in der Rückseite (15) des Ankers (14) einander zugewandt ausgebildet ist,
und **dadurch gekennzeichnet, dass** die mindestens zwei Gewindestangen umfassen:
- eine Referenz-Gewindestange (22A, 22B, 22C), die eine Referenz-Kugelmutter trägt, deren aktive Fläche mit einer komplementären kugelförmigen Referenz-Lagerfläche (132A, 132B, 132C) mit einem gestutzten Kugelprofil zusammenwirkt;
- die mindestens zwei Gewindestangen mindestens eine Einstellgewindestange (24A, 24B, 24C) aufweisen, die eine Einstellkugelmutter trägt, deren aktive Fläche mit einer komplementären zylindrischen Einstelllagerfläche (134A, 134B, 134C) mit einem Zylinderkanalprofil zusammenwirkt.

2. Vorrichtung nach Anspruch 1, **dadurch gekennzeichnet, dass** der Visiermechanismus eine dritte Gewindestange (26A, 26B, 26C) zum Schwenken parallel zu den Referenz- und Einstellgewindestäben umfasst, die von der zugehörigen Halterung (14) getragen wird, die sich in Längsrichtung nach hinten durch ein zugeordnetes Loch (126A, 126B, 126C) in der Armatur (14) erstreckt und eine schwenkbare Kugelmutter (28A, 28B, 28C) mit einer aktiven Fläche (30A, 30B) trägt, 30C) mit einem verkürzten Kugelprofil, das mit einer komplementären Stützfläche aus linearem Profil (136A, 136B, 136C) zum Schwenken zusammenwirkt, die in der Rückseite (15) des Ankers (14) gegenüberliegend ausgebildet ist, um mit der Referenzgewindestange (22A, 22B) zu bilden, 22C) Schwenkführungsmittel, von der Halterung in Bezug auf die Verstärkung um eine Drehachse (APA, APB, APC), die durch die Zentren (CRA, CRB, CRC) der aktiven Oberflächen (132A, 132B, 132C) der Referenzkugelmutter und der Schwenkkugelmutter verläuft.

3. Vorrichtung nach Anspruch 2, **dadurch gekennzeichnet, dass** die komplementäre lineare Profil-Lagerfläche zwei gerade Lagerrippen (136A, 136B, 136C) aufweist, die auf beiden Seiten der schwenkbaren Kugelmutter angeordnet sind.

4. Vorrichtung nach einem der Ansprüche 1 bis 3, **dadurch gekennzeichnet, dass** sich die Linie, die durch die Zentren der aktiven Oberflächen der Referenz-Kugelmutter und der EinstellKugelmutter verläuft, in einer horizontalen Ebene erstreckt, um die Neigung der Emissionsachse des optischen Moduls einzustellen.

5. Vorrichtung nach einem der Ansprüche 1 bis 3, **dadurch gekennzeichnet, dass** sich die Linie, die durch die Zentren der aktiven Oberflächen der Referenz-Kugelmutter und der EinstellKugelmutter verläuft, in einer vertikalen Ebene erstreckt, um die Neigung der Emissionsachse des optischen Moduls einzustellen.

6. Vorrichtung nach Anspruch 3, **dadurch gekennzeichnet, dass** die Drehachse (APA, APB, APC) orthogonal zu der Linie verläuft, die durch die Zentren der aktiven Flächen der Referenzkugelmutter und der Einstellkugelmutter verläuft.

7. Vorrichtung nach einem der obigen Ansprüche, **dadurch gekennzeichnet, dass** der Abschnitt jeder Gewindestange (22A, 24A, 26A, 26A, 26A, 22B, 24B, 24B, 26B, 22C, 24C, 26C), die sich in Längsrichtung durch das zugehörige Loch (122A, 124A, 126A, 122B, 124B, 126B, 122C, 124C, 124C, 126C, 126C) des Ankers (14) erstreckt, mit einem radialen Spiel in dem zugehörigen Loch aufgenommen ist.

8. Vorrichtung nach einem der obigen Ansprüche, **dadurch gekennzeichnet, dass** der Träger (16A, 16B, 16C) einen flachen Befestigungsflügel (18A, 18B, 18C) aufweist, der sich in einer Ebene erstreckt, die im Allgemeinen orthogonal zur Emissionsachse verläuft und die die Gewindestangen trägt, die sich von einer Rückseite des Befestigungsflügels in Längsrichtung nach hinten erstrecken.

9. Vorrichtung nach Anspruch 8, **dadurch gekennzeichnet, dass** der Befestigungsflügel (18A, 18B, 18C) eine Stirnfläche aufweist, die mindestens eine Komponente (52A, 52B, 52C) des optischen Moduls (12A, 12B, 12C) trägt.

10. Vorrichtung nach Anspruch 8, **dadurch gekennzeichnet, dass** der Halter (16A, 16B, 16C) eine Platte (20A, 20B, 20C) aufweist, die sich vom Befestigungsflügel (18A, 18B, 18C) nach vorne erstreckt und mindestens eine Komponente (50A, 50B, 50C) des optischen Moduls trägt.

11. Vorrichtung nach einem der obigen Ansprüche, **dadurch gekennzeichnet, dass** der Träger (16A, 16B, 16C) durch Formen in einem Stück hergestellt ist.

12. Vorrichtung nach einem der obigen Ansprüche, **dadurch gekennzeichnet, dass** die Verstärkung (14) eine Platte (14A, 14B, 14C) ist, in der die Löcher ausgebildet sind und die durch die Rückseite (15) und durch eine Vorderseite (13) begrenzt ist.

13. Vorrichtung nach Anspruch 10 in Kombination mit einem der Ansprüche 8 bis 10, **dadurch gekennzeichnet, dass** sich die Platte (14A, 14B, 14C) in einer Ebene erstreckt, die im Allgemeinen parallel zu dem Befestigungsflügel (18A, 18B, 18C) verläuft.

14. Vorrichtung nach einem der vorstehenden Ansprüche, **dadurch gekennzeichnet, dass** die Verstärkung (14) durch Formen in einem Stück hergestellt ist.

15. Vorrichtung nach einem der vorstehenden Ansprüche, **dadurch gekennzeichnet, dass** das optische Modul (12A, 12B, 12C) umfasst:
* oder die Anordnung eines Kollektors (50A, 50B, 50C), der zum Sammeln von Licht von einer Lichtquelle angeordnet ist, eine Biegemaschine (56A, 56B, 50C) mit einer Trennkante, um nur einen Teil des Strahls vom Kollektor durchzulassen und dadurch einen entsprechenden Lichtstrahl und dessen Abschaltung zu erzeugen, und einen Reflektor (52A, 52B, 52C), der zum Vorwärtsstrahlen des entsprechenden Lichtstrahls angeordnet ist;
* oder die Anordnung eines Kollektors, der angeordnet ist, um Licht von einer Lichtquelle zu sammeln, eine Falzmaschine mit mindestens einer Schneidkante, um nur einen Teil des Strahls vom Kollektor durchzulassen und den entsprechenden Lichtstrahl und seine Abschaltung zu emittieren, und eine Linse, die angeordnet ist, um den Lichtstrahl vom Kollektor zu fokussieren;
* oder einen Reflektor mit einer komplexen Oberfläche, der konfiguriert ist, um Licht von einer Lichtquelle zu sammeln und den entsprechenden Lichtstrahl mit einer Abschaltung nach vorne zu senden.

16. Vorrichtung nach einem der obigen Ansprüche, **dadurch gekennzeichnet, dass** das optische Modul (12A, 12B, 12C) eine Kühlvorrichtung (54A, 54B, 54C) beinhaltet, die direkt oder indirekt mit dem Träger (16A, 16B, 16C) in Kontakt steht.

17. Vorrichtung nach einem der obigen Ansprüche, **dadurch gekennzeichnet, dass** das optische Modul mindestens eine Lichtquelle in Form mindestens einer Leuchtdiode umfasst.

18. Beleuchtungs- und/oder Signalisierungsanordnung (10), insbesondere für Kraftfahrzeuge, umfassend mindestens:
- eine erste Vorrichtung nach einem der vorhergehenden Ansprüche auf Vorwärtsemission eines ersten Lichtstrahls entlang einer horizontalen Emissionsachse (VA);
- und eine zweite Vorrichtung nach einem der vorherigen Ansprüche auf Vorwärtsemission eines zweiten Lichtstrahls entlang einer horizontalen Emissionsachse (VB),
wobei der erste Träger (16A) der ersten Vorrichtung und der zweite Träger (16B) der zweiten Vorrichtung relativ zueinander auf einer gemeinsamen Verstärkung (14) angeordnet sind, die sich in einer Querebene im Allgemeinen orthogonal zu den Emissionsachsen erstreckt,
wobei der erste Halter (16A) und der zweite Halter (16B) über einen ersten Visiermechanismus bzw. einen zweiten Visiermechanismus einstellbar am gemeinsamen Rahmen (14) montiert sind.

19. Zusammen nach Anspruch 18, **dadurch gekennzeichnet, dass** der erste Visiermechanismus Mittel zum Verriegeln der ersten Halterung (16A) in Position in Bezug auf die gemeinsame Verstärkung (14, 14A) beinhaltet.

20. Zusammen nach Anspruch 19, **dadurch gekennzeichnet, dass** jede Gewindestange des ersten Visiermechanismus eine Schulter (40A) aufweist, die in Längsrichtung gegen einen gegenüberliegenden Abschnitt (42A) einer Stirnseite (13) der gemeinsamen Verstärkung (14, 14A) abgestützt ist.

21. Zusammen nach Anspruch 18, **dadurch gekennzeichnet, dass** der zweite Visiermechanismus Mittel (28B) zum Einstellen der Längsposition des zweiten Trägers in Bezug auf die gemeinsame Verstärkung in einer Richtung parallel zur zweiten Emissionsachse umfasst.

22. Zusammen nach Anspruch 21, **dadurch gekennzeichnet, dass** sich jede Gewindestange des zweiten Visiermechanismus durch eine Feder (44B) erstreckt, die zwischen dem zweiten Träger (16B) und dem gemeinsamen Anker (14) längs zusammengedrückt gelagert ist.

23. Zusammen nach einem der Ansprüche 18 bis 22, **dadurch gekennzeichnet, dass** es eine dritte Vorrichtung nach einem der vorherigen Ansprüche auf Vorwärtsemission eines dritten Lichtstrahls entlang einer horizontalen Emissionsachse (VC) umfasst,
wobei die dritte Halterung (16C) der dritten Vorrichtung auf dem gemeinsamen Anker (14, 14A) angeordnet und über einen dritten Sichtmechanismus, dessen Aufbau mit dem des zweiten Sichtmechanismus identisch ist, verstellbar auf dem gemeinsamen Anker montiert ist.

24. Zusammen nach Anspruch 23, **dadurch gekennzeichnet, dass** die erste Vorrichtung quer zwischen der zweiten und dritten Vorrichtung angeordnet ist.

## Claims

1. Lighting and/or signaling device, especially for an automotive vehicle, comprising at least one optical module (12A, 12B, 12C) for emission of a light beam (VA, VB, VC) in the forward direction along a horizontal axis of emission, which is mounted on a support (16A, 16B, 16C) arranged on a frame (14) extending in a transverse plane which is generally transversal to the axis of emission, the support (16A, 16B, 16C) being mounted in adjustable manner on the frame (14) by means of an aiming mechanism to enable the adjusting of the axis of emission of the optical module,
the aiming mechanism comprising at least two parallel threaded rods (22A, 22B, 22C - 24A, 24B, 24C) carried by the support, each of which extends longitudinally backward through an associated hole (122A, 122B, 122C - 124A, 124B, 124C) in the frame (14) and carries a spherical nut (28A, 22B, 28C) comprising an active clamping face (30A, 30B, 30C) of truncated spherical profile which cooperates with a complementary bearing surface formed opposite said active clamping face in the rear face (15) of the frame (14),
said at least two threaded rods comprising:
- one reference threaded rod (22A, 22B, 22C) carrying a spherical reference nut whose active face cooperates with a complementary spherical reference bearing surface (132A, 132B, 132C) of truncated spherical profile;
**characterized in that** said at least two threaded rods comprise at least one adjustment threaded rod (24A, 24B, 24C) which carries a spherical adjustment nut whose active face cooperates with a complementary cylindrical adjustment bearing surface (134A, 134B, 134C) of truncated cylindrical profile.

2. Device according to Claim 1, **characterized in that** the aiming mechanism comprises a third pivoting threaded rod (26A, 26B, 26C) parallel to the reference and adjustment threaded rods which is carried by the associated support (14), which extends longitudinally backward through an associated hole (126A, 126B, 126C) in the frame (14) and which carries a spherical pivoting nut (28A, 28B, 28C) comprising an active face (30A, 30B, 30C) of truncated spherical profile which cooperates with a complementary bearing surface of linear pivoting profile (136A, 136B, 136C) formed opposite said active face in the rear face (15) of the frame (14), constituting with the reference threaded rod (22A, 22B, 22C) means of pivoting guidance of the support in relation to the frame about a pivoting axis (APA, APB, APC) passing through the centers (CRA, CRB, CRC) of the active surfaces (132A, 132B, 132C) of the spherical reference nut and the spherical pivoting nut.

3. Device according to Claim 2, **characterized in that** said complementary bearing surface of linear profile comprises two rectilinear support ribs (136A, 136B, 136C) situated on either side of the spherical pivoting nut.

4. Device according to any one of Claims 1 to 3, **characterized in that** the line passing through the centers of the active surfaces of the spherical reference nut and the spherical adjustment nut extends in a horizontal plane for adjusting the inclination of the axis of emission of the optical module.

5. Device according to any one of Claims 1 to 3, **characterized in that** the line passing through the centers of the active surfaces of the spherical reference nut and the spherical adjustment nut extends in a vertical plane for adjusting the inclination of the axis of emission of the optical module.

6. Device according to Claim 3, **characterized in that** the pivoting axis (APA, APB, APC) is orthogonal to the line passing through the centers of the active surfaces of the spherical reference nut and the spherical adjustment nut.

7. Device according to any one of the preceding claims, **characterized in that** the segment of each threaded rod (22A, 24A, 26A, 22B, 24B, 26B, 22C, 24C, 26C) extending longitudinally through the associated hole (122A, 124A, 126A, 122B, 124B, 126B, 122C, 124C, 126C) in the frame (14) is received with radial play in said associated hole.

8. Device according to any one of the preceding claims, **characterized in that** the support (16A, 16B, 16C) comprises a planar fixation wing (18A, 18B, 18C) extending in a plane generally orthogonal to the axis of emission and carrying said threaded rods extending longitudinally backward from a rear face of this fixation wing.

9. Device according to Claim 8, **characterized in that** the fixation wing (18A, 18B, 18C) comprises a front face carrying at least one component (52A, 52B, 52C) of the optical module (12A, 12B, 12C).

10. Device according to Claim 8, **characterized in that** the support (16A, 16B, 16C) comprises a board (20A, 20B, 20C) extending to the front from the fixation wing (18A, 18B, 18C) and carrying at least one component (50A, 50B, 50C) of the optical module.

11. Device according to any one of the preceding claims, **characterized in that** the support (16A, 16B, 16C) is made as a single piece by molding.

12. Device according to any one of the preceding claims, **characterized in that** the frame (14) is a plate (14A, 14B, 14C) in which said holes are formed and which is bounded by said rear face (15) and by a front face (13).

13. Device according to Claim 10, taken in combination with any one of Claims 8 to 10, **characterized in that** said plate (14A, 14B, 14C) extends in a plane generally parallel to said fixation wing (18A, 18B, 18C).

14. Device according to any one of the preceding claims, **characterized in that** the frame (14) is made as a single piece by molding.

15. Device according to any one of the preceding claims, **characterized in that** the optical module (12A, 12B, 12C) comprises:
* either the assembly of a collector (50A, 50B, 50C) disposed to collect the light emanating from a light source, a bending element (56A, 56B, 50C) having a cutting edge so as to let pass only a portion of the beam coming from the collector and to thus produce a corresponding light beam and its cutoff, and a reflector (52A, 52B, 52C) disposed to emit said corresponding light beam in the forward direction;
* or the assembly of a collector disposed to collect the light emanating from a light source, a bending element having at least one cutting edge so as to let pass only a portion of the beam coming from the collector and to emit the corresponding light beam and its cutoff, and a lens disposed to focus the light beam coming from the collector;
* or a reflector having a complex surface configured to collect the light emanating from a light source and to emit in the forward direction the corresponding light beam having a cutoff.

16. Device according to any one of the preceding claims, **characterized in that** the optical module (12A, 12B, 12C) comprises a cooling device (54A, 54B, 54C) which directly or indirectly is in contact with the support (16A, 16B, 16C).

17. Device according to any one of the preceding claims, **characterized in that** the optical module comprises at least one light source in the form of at least one light-emitting diode.

18. Lighting and/or signaling assembly (10), especially for an automobile, comprising at least:
- a first device according to any one of the preceding claims for emission of a first light beam in the forward direction along a horizontal axis of emission (VA);
- and a second device according to any one of the preceding claims for emission of a second light beam in the forward direction along a horizontal axis of emission (VB),
the first support (16A) of the first device and the second support (16B) of the second device being arranged with respect to each other on a common frame (14) extending in a transverse plane generally orthogonal to the axes of emission,
the first support (16A) and the second support (16B) being mounted in adjustable manner on the common frame (14) by means of a first aiming mechanism and a second aiming mechanism, respectively.

19. Assembly according to Claim 18, **characterized in that** the first aiming mechanism comprises means of locking in position the first support (16A) with respect to the common frame (14, 14A).

20. Assembly according to Claim 19, **characterized in that** each threaded rod of the first aiming mechanism comprises a shoulder (40A) which bears longitudinally against an opposite portion (42A) of a front face (13) of the common frame (14, 14A).

21. Assembly according to Claim 18, **characterized in that** the second aiming mechanism comprises means (28B) of adjusting the longitudinal position of the second support with respect to the common frame, along a direction parallel to the second axis of emission.

22. Assembly according to Claim 21, **characterized in that** each threaded rod of the second aiming mechanism extends through a spring (44B) which is mounted compressed longitudinally between the second support (16B) and the common frame (14).

23. Assembly according to any one of Claims 18 to 22, **characterized in that** it comprises a third device according to any one of the preceding claims for emission of a third light beam in the forward direction along a horizontal axis of emission (VC),
the third support (16C) of the third device being disposed on the common frame (14, 14A), and being mounted in adjustable manner on the common frame by means of a third aiming mechanism whose design is identical to that of the second aiming mechanism.

24. Assembly according to Claim 23, **characterized in that** the first device is disposed transversely between the second and third devices.
